# EUROPÄISCHE PATENTSCHRIFT

(11) **EP 1 098 409 B1**
(45) Veröffentlichungstag und Bekanntmachung des Hinweises auf die Patenterteilung: **26.05.2004**
(21) Anmeldenummer: 00120504.6
(22) Anmeldetag: 20.09.2000
(51) Int. Cl.: H02G 3/12

(54) **Leitungsführungskanal**
Conduit channel
Canalisation pour conduites

(30) Priorität: 04.11.1999 DE 29919349 U
(43) Veröffentlichungstag der Anmeldung: 09.05.2001
(73) Patentinhaber: Tehalit GmbH & Co. KG, 67716 Heltersberg (DE)
(72) Erfinder: Schneckmann, Horst, 67705 Trippstadt (DE); Schmitt. Erwin, 67659 Kaiserslautern (DE); Schnurr, Richard, 66957 Vinningen (DE); Kauf, Peter, 66482 Zweibrücken (DE)
(74) Vertreter: Patentanwälte Möll und Bitterich

(56) Entgegenhaltungen:
- EP-A- 0 677 899
- EP-A- 0 932 233
- US-A- 3 821 688

## Beschreibung

Die Erfindung betrifft Leitungsführungskanäle gemäß dem Oberbegriff des Anspruchs 1, ausgerüstet mit Einrichtungen zum versenkten Einbau von Elektroinstallationsgeräten.

Leitungsführungskanäle, die so konzipiert sind, dass elektrische Installationsgeräte wie Steckdosen, Schalter, Fernsteuermodule, Sicherungen usw. eingebaut werden können, werden als Geräteeinbaukanäle bezeichnet. Geräteeinbaukanäle werden seit Jahrzehnten weltweit in großen Stückzahlen in den unterschiedlichsten Ausgestaltungen produziert und montiert. Bei der Herstellung sind sowohl technische als auch ästhetische Gesichtspunkte zu beachten. Technisch gesehen muss die Verbindung zwischen Kanal und Installationsgerät ausreichend stabil sein, damit die Kräfte, die beispielsweise beim Einstecken und insbesondere Herausziehen von Steckern in bzw. aus Starkstromsteckdosen auftreten, schadlos aufgenommen werden können. Des weiteren muss die elektrische Sicherheit für den Benutzer garantiert werden. Schließlich sollen die Installationsgeräte leicht zugänglich sein und einen ästhetisch gefälligen Anblick bieten.

Aus der EP-A 0 240 916 ist ein Installationsgerät für Leitungsführungskanäle bekannt, welches die oben genannten Bedingungen bereits teilweise erfüllt. Das Installationsgerät ist eine Starkstrom-Doppelsteckdose, welche mit Hilfe eines von vorne zu betätigenden Verschlusses direkt an der Rückwand des Kanalunterteils lösbar verankert werden kann. Anschlussräume an den Stirnseiten ermöglichen den beidseitigen Anschluss von elektrischen Kabeln. Für die Ästhetik ist eine spezielle Abdeckblende vorgesehen, die auf das Installationsgerät aufgerastet wird und die offene Vorderseite des Kanalunterteils im Bereich des Installationsgerätes verschließt. An der Blende ist eine Klappe angelenkt, die im aufgeklappten Zustand den Zugang zum Installationsgerät freigibt, im zugeklappten Zustand dagegen das Installationsgerät abdeckt.

Bei dieser vorbekannten Konstruktion ist noch unbefriedigend, dass Abdeckblende und insbesondere Abdeckklappe weit über die Vorderfront des Kanals vorstehen.

Der vorliegenden Erfindung liegt daher die Aufgabe zugrunde, Einrichtungen zum Einbau von Elektroinstallationsgeräten in Leitungsführungskanäle anzugeben, die einen geschützten, flachen und lückenlosen Einbau der Installationsgeräte ermöglichen, so dass eine im wesentlichen glatte Kanalfront entsteht.

Diese Aufgabe wird gelöst durch einen Leitungsführungskanal mit den Merkmalen des Anspruchs 1.

Dank des speziellen Halters wird das Installationsgerät nicht mehr am Boden des Geräteeinbaukanals befestigt sondem am Halter. Dadurch verschwindet das Elektroinstallationsgerät vollständig im Inneren des Kanals. Handelt es sich um eine Steckdose, so verschwindet auch ein eingesteckter Stecker im Kanal und die Außenfront des Kanals bleibt im wesentlichen glatt.

Die elektrische Sicherheit für die Kanalbenutzer wird durch die Abdeckmulde garantiert, die den für die Benutzer zugänglichen Raum im Kanalunterteil begrenzt. Da die Mulde am Halter schwenkbar angelenkt ist, kann sie bei Bedarf herausgeschwenkt werden, zum Beispiel wenn elektrische Leitungen in den Kanal eingelegt oder aus dem Kanal herausgenommen werden sollen. Bisher mussten die elektrischen Leitungen hinter den schon eingebauten Geräten hindurchgefädelt werden, was umständlich und zeitraubend ist.

Vorteilhafterweise besitzt die Mulde ein Halteprofil, das mit dem Deckelverschlussprofil korrespondiert. Dadurch kann auf besondere Haltevorrichtungen wie Schrauben und dergleichen verzichtet werden.

Gemäß einer Ausgestaltung der Erfindung besitzt der Halter im Bereich des Kopfes zwei erste Achszapfen, die Mulde zwei damit korrespondierende Gelenkbohrungen. Diese Konstruktion ist einfach und funktionssicher.

Zusätzlich kann der Halter zwei zweite Achszapfen besitzen, der Klappdeckel zwei damit korrespondierende Gelenkbohrungen. Dadurch entfällt die Notwendigkeit, für den Klappdeckel besondere Gelenke vorzusehen und der Klappdeckel sitzt immer korrekt zum Kanal und zum Installationsgerät.

Vorteilhafterweise sitzen die Achszapfen an zwei gekröpften Konsolen, die im Kopfbereich des Halters an diesen angeformt sind.

Anhand der Zeichnung soll die Erfindung in Form eines Ausführungsbeispiels näher erläutert werden. Es zeigen
- Fig. 1: einen Querschnitt durch einen Leitungsführungskanal mit versenkt eingebauter, an einem Halter befestigter Steckdose und geschlossenem Klappdeckel,
- Fig. 2: den Kanal der Fig. 1 mit aufgeklapptem Klappdeckel,
- Fig. 3: den Kanal der Fig. 1 und 2 mit aufgeklapptem Klappdeckel und herausgeschwenkter Mulde,
- Fig. 4: eine Frontansicht eines Halters und
- Fig. 5: eine Seitenansicht des Halters der Fig. 4.

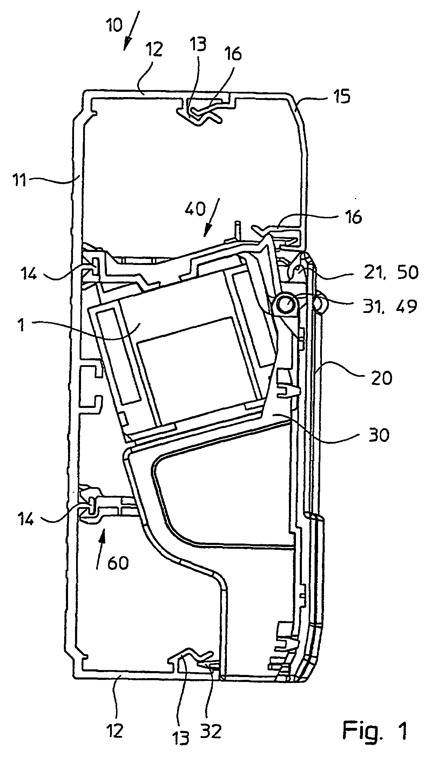

Fig. 1 zeigt einen Querschnitt durch einen Leitungsführungskanal, dessen Unterteil 10 einen U-förmigen Querschnitt besitzt und einen Boden 11 sowie zwei Seitenwände 12 mit jeweils einem Deckelverschlussprofil 13 umfasst. An der Innenseite des Bodens 11 sind Halteleisten 14 angeformt.

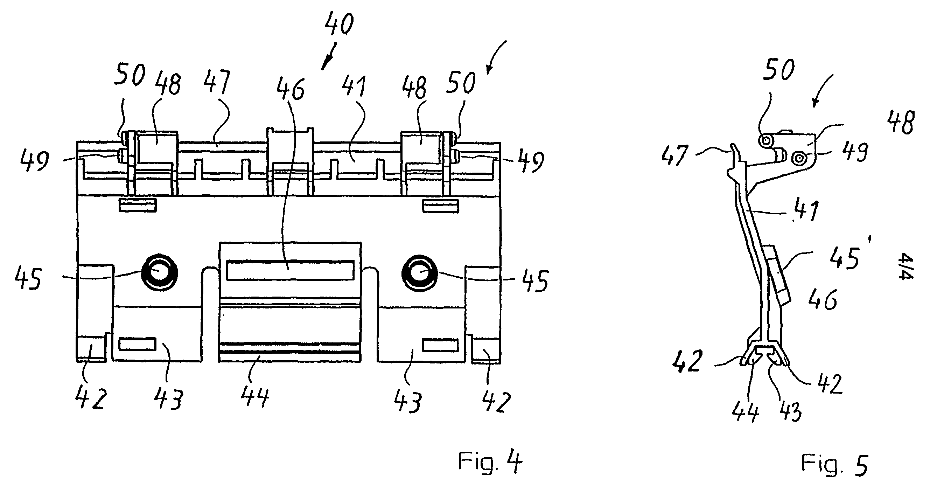

Auf die Halteleisten 14 sind Halter 40, 60 aufgerastet, deren Konstruktion und Funktion anhand der Fig. 4 und 5 näher erläutert werden sollen. Die Halter 40, 60 besitzen einen Profilkopf, der die gleiche Funktion erfüllt wie die Deckelverschlussprofile 13 am Kanalunterteil 10.

Die offene Vorderseite des Kanalunterteils 10 ist mit Deckeln 15, 17 verschlossen, deren Halteprofile 16 mit den Deckelverschlussprofilen 13 des Kanalunterteils 10 und dem Profilkopf der Halter 40, 60 korrespondieren.

Am Halter 40 ist als Beispiel eines Elektroinstallationsgeräts eine Steckdose 1 befestigt. Die Front der Steckdose 1 ist leicht geneigt, um die Zugänglichkeit zu verbessern. Hierzu ist der Halter 40 leicht abgewinkelt.

Aufgrund der besonderen Form und Position des Halters 40 einerseits und der Steckdose 1 andererseits befindet sich die Steckdose 1 im eingebauten Zustand innerhalb des von den Deckeln 15, 17 verschlossenen Kanalunterteil 10.

Im Bereich der Steckdose 1 ist der Kanal durch einen Klappdeckel 20 verschlossen. Dieser ist mit Achsbohrungen 21 ausgerüstet, die mit Achszapfen 50 am Halter 40 korrespondieren.

Um den für die Benutzer der Steckdose 1 zugänglichen Raum im Kanalunterteil 10 zu begrenzen und um die erforderliche elektrische Sicherheit zu gewährleisten, ist eine Mulde 30 vorgesehen, die den Kanal nach rechts und links sowie nach hinten begrenzt. Die Mulde 30 ist so geformt, dass in die Steckdose 1 eingesteckte Stecker ausreichend Platz finden.

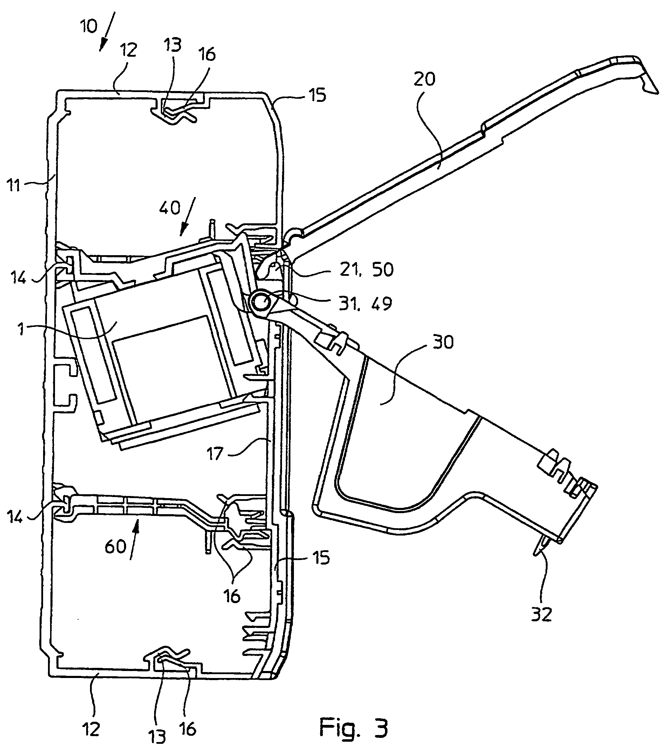

Wie insbesondere Fig. 3 erkennen lässt, besitzt die Mulde 30 Gelenkbohrungen 31, die mit Gelenkzapfen 49 am Halter 40 korrespondieren. Dadurch kann die Mulde 30 weit aus dem Kanalunterteil 10 herausgeschwenkt werden, falls elektrische Leitungen in den Kanal eingelegt oder aus dem Kanal herausgenommen werden sollen.

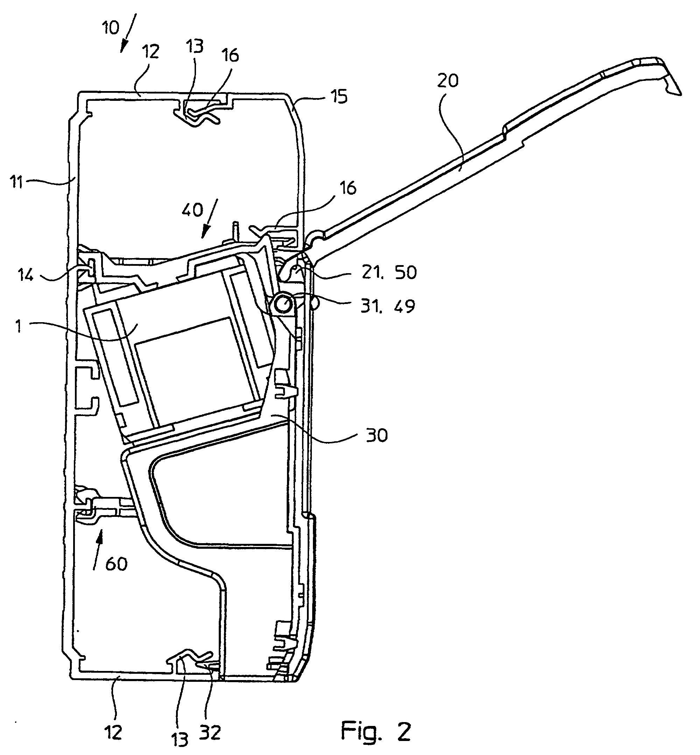

Die Mulde 30 ist mit einem Verschlussprofil 32 ausgerüstet, welches mit dem Deckelverschlussprofil 13 am Kanalunterteil 10 korrespondiert (Fig. 1 und 2).

Fig. 4 als Vorderansicht und Fig. 5 als Seitenansicht zeigen den Halter 40. Der Halter 40 umfasst ein flächenhaftes Basiselement 41, an dessen unterem Ende Stützfüße 42 und Haltefüße 43, 44 angebracht sind. Die Stützfüße 42 haben die Aufgabe, den Halter senkrecht auf dem Kanalboden 11 abzustützen. Die Haltefüße 43, 44, die nach Art einer Zange kooperieren, haben die Aufgabe, den Halter 40 an der Halteleiste 14 zu fixieren. Dank der Funktionstrennung können die Füße 42, 43, 44 jeweils optimal auf ihre jeweilige Funktion hin optimiert werden.

Am oberen Ende des Halters 40 erkennt man einen Profilkopf 47, der mit den Halteprofilen 16 an den Kanaldeckeln 15, 17 korrespondiert. Des weiteren erkennt man im Kopfbereich zwei gekröpfte Konsolen 48, an denen die Gelenkzapfen 49 für die schwenkbare Mulde 30 und die Achszapfen 50 für den Klappdeckel 20 angeformt sind.

Im Zentrum der Basisplatte 41 erkennt man einen Langschlitz 46. Dieser ermöglicht die Montage der Steckdose 1, beispielsweise mit Hilfe eines Drehknebels am Boden der Steckdose 1, wie er aus der eingangs genannten EP-A 0 240 916 bekannt ist.

Rechts und links vom Langschlitz 46 erkennt man zwei Justier- und Haltebohrungen 45, die mit entsprechenden Justierzapfen (nicht dargestellt) am Boden der Steckdose 1 korrespondieren.

Der zweite Halter 60 entspricht im wesentlichen dem Halter 40 der Fig. 4 und 5. Es fehlen jedoch die Konsolen mit den Gelenk- und Achszapfen.

## Patentansprüche

1. Leitungsführungskanal mit Einrichtungen zum versenkten Einbau von Elektroinstallationsgeräten (1), umfassend
- ein Kanalunterteil (10) mit
-- Boden (11),
-- Seitenwänden (12),
-- Deckelverschlussprofilen (13) an den Seitenwänden (12),
-- Halteleisten (14) an der Innenseite des Bodens (11)
-- und einem U- bzw. C-förmigen Querschnitt,
- wenigstens einen Deckel (15) mit Halteprofilen (16), passend zu den Deckelverschlussprofilen (13),
- einen Halter (40),
-- zu befestigen an einer der Halteleisten (14),
-- mit einem Kopf (47) zum Halten des wenigstens einen Deckels (15)
-- und mit Einrichtungen (45, 46) zum Befestigen des Gerätes (1),
- und einen Klappdeckel (20), der den Kanal (10) im Bereich des Gerätes (1) abdeckt
**gekennzeichnet durch** die Merkmale:
- es ist eine Abdeckmulde (30) vorgesehen, die
-- mit dem Kanalunterteil (10) und dem Gerät (1) korrespondiert
-- und den den Benutzern zugänglichen Teil des Kanalunterteils (10) im Bereich des Geräts (1) begrenzt,
- die Mulde (30) ist am Halter (40) schwenkbar angelenkt.

2. Leitungsführungskanal nach Anspruch 1, **gekennzeichnet durch** das Merkmal:
- die Mulde (30) besitzt ein Halteprofil (32), das mit dem Deckelverschlussprofil (13) korrespondiert.

3. Leitungsführungskanal nach Anspruch 1 oder 2, **gekennzeichnet durch** die Merkmale:
- der Halter (40) besitzt im Bereich des Kopfes zwei Gelenkzapfen (49),
- die Mulde (30) zwei damit korrespondierende Gelenkbohrungen (31).

4. Leitungsführungskanal nach einem der Ansprüche 1 bis 3, **gekennzeichnet durch** die Merkmale:
- der Halter (40) besitzt zwei zweite Achszapfen (50),
- der Klappdeckel (20) zwei damit korrespondierende Achsbohrungen (21).

5. Leitungsführungskanal nach Anspruch 3 oder 4, **gekennzeichnet durch** das Merkmal:
- Gelenkzapfen (49) und Achszapfen (50) sitzen an zwei gekröpften Konsolen (48).

## Claims

1. Wiring trunking with devices for the sunk installation of electrical installation appliances (1), comprising
- a trunking lower part (10) with
-- a bottom (11),
-- side walls (12),
-- cover closure profiles (13) at the side walls (12),
-- retaining strips (14) at the inside of the bottom (11)
-- and a U- or C-shaped cross section,
- at least one cover (15) with retaining profiles (16), matching the cover closure profiles (13),
- a holder (40),
-- to fasten to one of the retaining strips (14),
-- with a head (47) for retaining the at least one cover (15)
-- and with devices (45, 46) for fastening the appliance (1),
- and a hinged cover (20) which covers the trunking (10) in the region of the appliance (1),
**characterised by** the features:
- a covering trough (30) is provided which
-- corresponds to the trunking lower part (10) and the appliance (1)
-- and bounds the part of the trunking lower part (10) which is accessible to the users in the region of the appliance (1),
- the trough (30) is pivotably hinged to the holder (40).

2. Wiring trunking according to Claim 1, **characterised by** the feature:
- the trough (30) has a retaining profile (32) which corresponds to the cover closure profile (13).

3. Wiring trunking according to Claim 1 or 2, **characterised by** the features:
- the holder (40) has two hinge pins (49) in the region of the head,
- the trough (30) has two hinge bores (31) corresponding to the pins.

4. Wiring trunking according to any one of Claims 1 to 3, **characterised by** the features:
- the holder (40) has two second pivot pins (50),
- the hinged cover (20) has two pivot bores (21) corresponding to the pins.

5. Wiring trunking according to Claim 3 or 4, **characterised by** the feature:
- the hinge pins (49) and the pivot pins (50) are fitted on two elbowed brackets (48).

## Revendications

1. Goulotte d'installation électrique pour la pose encastrée d'appareils d'installation électrique (1) comprenant
- une partie inférieure de goulotte (10) avec
- un fond (11),
- des parois latérales (12),
- des profilés de fermeture de couvercle (13) sur les parois latérales (12),
- des rails de fixation (14) sur la face intérieure du fond (11)
- et une section en U ou en C,
- au moins un couvercle (15) avec des profilés de retenue (16) adaptés aux profilés de fermeture de couvercle (13),
- un support (40)
- à fixer sur un des rails de fixation (14),
- avec une tête (47) pour retenir le(s) couvercle(s) (15)
- et avec des dispositifs (45, 46) pour la fixation de l'appareil (1),
- et un couvercle à charnière (20) qui couvre la goulotte (10) au niveau de l'appareil (1)
**caractérisée par le fait**
- **qu'**il est prévu un logement de protection (30) qui
- correspond à la partie inférieure de goulotte (10) et à l'appareil (1)
- et limite la partie de la partie inférieure de goulotte (10) accessible aux utilisateurs au niveau de l'appareil (1),
- **que** le logement (30) est articulé sur le support (40).

2. Goulotte d'installation électrique selon la revendication 1, **caractérisée par le fait que**
- le logement (30) possède un profilé de retenue (32) qui correspond au profilé de fermeture de couvercle (13).

3. Goulotte d'installation électrique selon la revendication 1 ou 2, **caractérisée par le fait que**
- le support (40) possède deux pivots (49) au niveau de la tête,
- le logement (30) deux trous d'articulation (31) qui leur correspondent.

4. Goulotte d'installation électrique selon l'une des revendications 1 à 3, **caractérisée par le fait que**
- le support (40) possède deux deuxièmes tourillons (50),
- le couvercle à charnière (20) deux trous d'axe (21) qui leur correspondent.

5. Goulotte d'installation électrique selon la revendication 3 ou 4, **caractérisée par le fait que**
- les pivots (49) et les tourillons (50) sont situés sur deux consoles coudées (48).
